# EUROPÄISCHE PATENTSCHRIFT

(11) **EP 3 546 717 B1**
(45) Veröffentlichungstag und Bekanntmachung des Hinweises auf die Patenterteilung: **08.12.2021**
(21) Anmeldenummer: 19165977.0
(22) Anmeldetag: 28.03.2019
(51) Int. Cl.: F01N 13/18, F16L 23/20, F16L 15/00

(54) **DICHTUNG FÜR ABGASSYSTEM**
SEAL FOR WASTE GAS SYSTEM
JOINT POUR SYSTÈME DE GAZ D'ÉCHAPPEMENT

(30) Priorität: 29.03.2018 DE 102018204856
(43) Veröffentlichungstag der Anmeldung: 02.10.2019
(73) Patentinhaber: Borgwarner Inc., Auburn Hills, Michigan 48326 (US)
(72) Erfinder: BRINKHAUS, Roland, 55546 Volxheim (DE); SCHWALL, Michael, 55576 Zotzenheim (DE)
(74) Vertreter: Peterreins Schley

(56) Entgegenhaltungen:
- EP-A2- 1 443 251
- EP-A2- 2 530 275
- EP-A2- 2 808 513
- DE-A1- 19 942 698
- FR-A1- 2 848 279

## Beschreibung

### Gebiet der Erfindung

Die vorliegende Erfindung betrifft eine Unterbaugruppe für ein Abgassystem mit einer Dichtung zum Abdichten einer Verbindung zwischen zwei Komponenten des Abgassystems und eine Aufladevorrichtung mit einer entsprechenden Unterbaugruppe.

### Hintergrund der Erfindung

Immer mehr Fahrzeuge der neueren Generation werden mit Aufladevorrichtungen ausgestattet. Um die Anforderungsziele und gesetzliche Auflagen zu erreichen, gilt es die Entwicklung im gesamten Antriebsstrang voranzutreiben und sowohl die einzelnen Komponenten als auch das System als Ganzes bezüglich ihrer Zuverlässigkeit, Effizienz und Fertigungskosten zu optimieren.

Bekannte Aufladevorrichtungen, wie zum Beispiel Abgasturbolader, werden in das Abgassystem eines Verbrennungsmotors integriert. Dabei entstehen mehrere Verbindungsbereiche zwischen unterschiedlichen abgasführenden Komponenten des Abgassystems und/oder der Aufladevorrichtung. Diese Verbindungsbereiche müssen entsprechend abgedichtet werden. Bekannt sind zum Beispiel mehrstufige Aufladungen, bei denen zwei Turbinenstufen, eine Hochdruckturbine und eine Niederdruckturbine, vorgesehen sind. Die Gehäuse der Hochdruckturbine und der Niederdruckturbine sind dabei in einem Flanschbereich miteinander verbunden. Um Leckage von Abgasen in die Umwelt in diesem Verbindungsbereich zu vermeiden, ist eine entsprechende Einrichtung zum Abdichten vorzusehen. Bekannte Lösungen zum Abdichten derartiger Verbindungsbereiche bestehen oft aus mehreren Komponenten, die mitunter schwierig zu montieren sind und beim Transport oder bei der Montage leicht verloren gehen können.

Außerdem kann im Verbindungsbereich der Turbinengehäuse eine Kanalverzweigung für ein Bypassventil angeordnet sein, so dass die Dichtungseinrichtung mehrere Bereiche abdichten muss. Um den Bypasskanal des Bypassventils zu verschließen, ist bei derartigen Ausgestaltungen eine entsprechende Klappenanordnung vorzusehen, die im geschlossenen Zustand auf einem entsprechenden Ventilsitz aufliegt. Der Ventilsitz wiederum kann von einem separaten Einsatz gebildet werden, der im Verbindungsbereich der Hochdruckturbine und der Niederdruckturbine angeordnet ist. Bekannte Einsätze sind mittels fertigungs- sowie montageaufwendiger und dementsprechend teurer Lösungen im Verbindungsbereich der Turbinen fixiert. Andere Verbindungsbereiche, die es abzudichten gilt, stellt zum Beispiel die Verbindung einer Aufladevorrichtung zum Abgaskrümmer dar.

DE 199 42 698 A1 offenbart eine Dichtungsanordnung zur Abdichtung zwischen zwei Passflanschen in einem Abgassystem. Die Dichtungsanordnung umfasst ein primäres Dichtungselement in Form eines Dichtrings und mindestens eine integrale länglich zum Flansch gerichtete Befestigungsklammer, die an einem Ende am Außenumfang des Dichtungselements verschweißt ist, und am anderen Ende eine Verriegelungszunge aufweist, die unter einem Winkel nach außen verläuft. Der Passflansch weist eine Vertiefung auf, in der die Dichtung eingesetzt wird, und mindestens einen Schlitz, in dem die Verriegelungszunge eingeführt wird, um die Dichtung in Position zu halten.

EP 2 808 513 A2 offenbart einen Ventilsitz und eine Dichtung zur Abdichtung zwischen einem Abgas-Bypass-Ventil eines Turboladers und einer zweiten Komponente, wobei die Abgase durch eine Öffnung in der Dichtung von einer Komponente zur anderen hindurchfließen. Die Dichtung umfasst eine weitgehend flache, mehrlagige Metalldichtung, die an ihrem Umfang mindestens eine integrierte, axial zur Öffnung verlaufende, Lasche aufweist, um mit dem Ventilsitz in Eingriff zu kommen und die Dichtung am Ventilsitz zu befestigen.

EP 2 530 275 A2 offenbart einen Ventilsitz für ein Abgas-Bypass-Ventil eines Turboladers und eine Dichtung zur gleichzeitigen Abdichtung zwischen einem Gehäuse und einer Komponente, sowie zwischen dem Ventilsitz und der Komponente. Die Dichtung weist eine ebene Fläche auf, sowie eine Fassung, wobei die Fassung eine Fläche aufweist, welche axial von der ebenen Fläche der Dichtung abgesetzt ist und ausgestaltet ist, um den Ventilsitz aufzunehmen.

EP 1 443 251 A2 offenbart eine Flanscheinheit bestehend aus einem Flansch und einer Dichtung, wobei der Flansch an seiner der Dichtung zugewandten Seite mindestens eine Vertiefung aufweist, und die Dichtung mindestens eine rechtwinklig und parallel zur Längsachse des Flansches abgebogene Lasche aufweist, die in die Vertiefung des Flansches eingreift. Dabei weist die Lasche einen Teilbereich auf, der von der Lasche abgebogen ist und unter Biegespannung an der Wand der Vertiefung anliegt, um die Dichtung in Position zu halten.

FR 2 848 279 A1 offenbart eine Dichtung zur Abdichtung zwischen zwei Abgaskanälen, wobei die Dichtung einen zentralen flachen Bereich aufweist, der an die Form des Flansches, auf dem er anliegt, angepasst ist, eine Öffnung, um dem Durchfluss der Abgase zu ermöglichen, und einen Peripheriebereich, der erst mit einem Winkel zum zentralen Bereich nach außen verläuft, um sich dann in einem entgegengesetzten Winkel senkrecht zur zentralen Fläche zu erstrecken. Von dem Peripheriebereich erstrecken sich drei Befestigungslaschen, die im Dreieck zueinander angeordnet sind und an ihren Enden jeweils einen nach innen gebogenen Haken zur Befestigung am Flansch des Abgaskanals aufweisen.

Ziel der vorliegenden Erfindung ist es demnach, eine verbesserte Lösung für die Abdichtung in einem Verbindungsbereich zweier abgasführender Komponenten bereitzustellen. Ein weiteres Ziel besteht darin einen im Verbindungsbereich zweier abgasführenden Komponenten angeordneten Einsatz auf einfache Weise zu fixieren.

### Zusammenfassung der Erfindung

Die vorliegende Erfindung betrifft eine Unterbaugruppe gemäß Anspruch 1 und eine mehrstufige Aufladevorrichtung gemäß Anspruch 12.

Die Erfindung umfasst eine Unterbaugruppe für ein Abgassystem eines Verbrennungsmotors mit einer ersten Komponente, wobei die erste Komponente zumindest einen Teil eines Kanalsystems und einen Flansch zur Verbindung mit einer zweiten Komponente aufweist, und mit einer Dichtung zum Abdichten der Verbindung zwischen den zwei Komponenten, wobei die Dichtung im Bereich des Flansches angeordnet ist, in Form einer Dichtscheibe ausgestaltet ist und mindestens eine Durchgangsöffnung zum Durchtritt von Abgasen aufweist, und mit mindestens einem integral mit der Dichtung ausgebildetes Befestigungselement zur verliersicheren Befestigung der Dichtung an der ersten Komponente des Abgassystems, und mit einem Einsatz, welcher ausgelegt ist, um eine Anlagefläche für ein Bypassventil bereitzustellen. Die Unterbaugruppe ist dadurch gekennzeichnet, dass der Einsatz zwischen der Dichtung, welche sich über den Einsatz erstreckt, und der ersten Komponente in einem Absatz im Bereich des Flansches aufgenommen wird, und dass der Einsatz von der Dichtung verliersicher in seiner Position an der ersten Komponente gehalten wird, in dem das Befestigungselement seitlich zwischen dem Einsatz und der Komponente angeordnet ist und in eine entsprechende Aussparung, welche in einer Seitenwand im Bereich des Absatzes vorgesehen ist, eingreift.

Durch das Vorsehen des bzw. der integralen Befestigungselemente kann die Dichtung an einer der Komponenten, z.B. einem ersten Turbinengehäuse, vormontiert werden, wobei sichergestellt wird, dass die Dichtung während eines Transports, zum Beispiel einer Lieferung vom Hersteller zum Kunden, nicht verloren geht. Außerdem kann eine verliersicher angebrachte Dichtung bei der Montage vorteilhaft sein, wenn zum Beispiel der Bereich des Turbinengehäuses, an dem die Dichtung vorgesehen ist, bei der Montage nach unten, heißt in Richtung Boden, zeigt. Durch die integrale Ausgestaltung des oder der Befestigungselemente kann eine separate Sicherungsvorrichtung eingespart werden, wodurch die gesamte Anzahl an Bauteilen reduziert wird. Dies führt wiederum zu einer Reduzierung bei den Herstell-, Lager- und Montagekosten und verringert die Fehleranfälligkeit bei der Montage. Folglich können Fehlervermeidungsvorkehrungen eingespart werden.

Die Dichtung erledigt somit ebenfalls als ein integrales Bauteil mehrere Aufgaben. Einerseits ermöglicht es die Dichtung unterschiedlicher Kanalbereiche, die sich von dem ersten Turbinengehäuse über den Verbindungsbereich in das zweite Turbinengehäuse erstrecken, gegeneinander sowie gegenüber der Umgebung abzudichten. Andererseits kann die Dichtung einen Einsatz verliersicher halten. Dies hat wiederum Vorteile, da sichergestellt werden kann, dass der Einsatz beim Transport nicht verloren geht. Ebenso kann die Position des Einsatzes für die Montage festgelegt werden und ein Herausfallen des Einsatzes wird verhindert, selbst wenn das Turbinengehäuse für die Montage so gedreht werden musst, dass der Einsatz nach unten in Richtung Boden zeigt.

In Ausgestaltungen können das bzw. die Befestigungselement(e) in einem Kopfbereich breiter ausgestaltet sein. Insbesondere können das bzw. die Befestigungselement(e) im Kopfbereich widerhakenförmig ausgebildet sein. Das bzw. die Befestigungselement(e) können an zumindest einem Ende des Kopfbereichs mindestens eine, bezogen auf den scheibenförmigen Grundkörper, radial nach außen und/oder radial nach innen gebogene Nase(n) aufweisen.

In Ausgestaltungen, die mit allen bisher beschriebenen Ausgestaltungen kombinierbar sind, können das bzw. die Befestigungselement(e) angepasst sein, zusammen mit entsprechenden Aussparungen in der ersten Komponente als Rastverbindung zu wirken.

In Ausgestaltungen, die mit allen bisher beschriebenen Ausgestaltungen kombinierbar sind, können das bzw. die Befestigungselement(e) federelastische Eigenschaften aufweisen.

In Ausgestaltungen, die mit allen bisher beschriebenen Ausgestaltungen kombinierbar sind, können zwischen 1 und 4 Befestigungselemente vorgesehen sein. Insbesondere können 2 oder 3 Befestigungselemente vorgesehen sein.

In Ausgestaltungen, die mit allen bisher beschriebenen Ausgestaltungen kombinierbar sind, kann die Dichtung außerdem eine Zentrierungsöffnung zur Aufnahme eines Zentrierstiftes aufweisen.

In Ausgestaltungen, die mit allen bisher beschriebenen Ausgestaltungen kombinierbar sind, kann die Dichtung ein Biegestanzteil sein. Die Dichtung kann zum Beispiel aus einem hochwarmfesten Blech gefertigt sein.

In Ausgestaltungen, die mit allen bisher beschriebenen Ausgestaltungen der Unterbaugruppe kombinierbar sind, kann die erste Komponente im Bereich des Flansches eine oder mehrere Aussparungen, entsprechend der Anzahl an Befestigungselementen, aufweisen, in die das bzw. die Befestigungselement(e) eingreifen. Die Aussparung(en) können zum Beispiel in einer Seitenwand im Bereich des Absatzes vorgesehen sein. Durch die Anordnung der Befestigungselemente und der entsprechenden Aussparungen in diesem Bereich der ersten Komponente, kann die Dichtung auf einfache Weise gleichzeitig als Verliersicherung für den Einsatz dienen.

In Ausgestaltungen, die mit allen bisher beschriebenen Ausgestaltungen der Unterbaugruppe kombinierbar sind, kann die Unterbaugruppe außerdem einen Zentrierstift umfassen, der in die Zentrieröffnung der Dichtung eingreift.

In Ausgestaltungen, die mit allen bisher beschriebenen Ausgestaltungen der Unterbaugruppe kombinierbar sind, kann die Unterbaugruppe außerdem eine Klappenanordnung eines Bypassventils zum Verschließen eines Bypasskanals umfassen. Die Klappenanordnung kann einen Klappenteller aufweisen, wobei der Klappenteller mit einem Ventilsitz zusammenwirkt, um den Bypasskanal zu verschließen. Der Ventilsitz kann zum Beispiel an der Anlagefläche des Einsatzes ausgebildet sein.

Die Erfindung umfasst außerdem eine mehrstufige Aufladevorrichtung für einen Verbrennungsmotor mit einer Hochdruckturbine und einer Niederdruckturbine umfassend eine Unterbaugruppe gemäß irgendeiner der vorangehend beschriebenen Ausgestaltungen, wobei die erste Komponente ein erstes Turbinengehäuse ist, wobei das erste Turbinengehäuse über den Flansch mit einem zweiten Turbinengehäuse der Hochdruckturbine verbunden ist, und, wobei die Dichtung und der Einsatz zwischen dem ersten Turbinengehäuse und dem zweiten Turbinengehäuse festgeklemmt sind.

Weitere Einzelheiten und Merkmale der Erfindung werden anhand der folgenden Figuren beschrieben.

### Kurzbeschreibung der Figuren

- Fig. 1A: zeigt eine Draufsicht der erfindungsgemäßen Dichtung gemäß einem Ausführungsbeispiel;
- Fig. 1B: zeigt eine erste Seitenansicht der erfindungsgemäßen Dichtung aus Fig. 1A;
- Fig. 1C: zeigt eine zweite Seitenansicht der erfindungsgemäßen Dichtung aus Fig. 1A;
- Fig. 1D: zeigt eine Detailansicht eines Befestigungselements der erfindungsgemäßen Dichtung aus Fig. 1A;
- Fig. 2A: zeigt eine perspektivische Ansicht eines Turbinengehäuses für eine erfindungsgemäße Unterbaugruppe bzw. Aufladevorrichtung gemäß einem Ausführungsbeispiel;
- Fig. 2B: zeigt eine Schnittansicht des Turbinengehäuses aus Fig. 2A;
- Fig. 3: zeigt eine Schnittansicht eines Einsatzes für eine erfindungsgemäße Unterbaugruppe bzw. Aufladevorrichtung gemäß einem Ausführungsbeispiel;
- Fig. 4: zeigt eine Schnittansicht eines Verbindungsbereichs zweier Komponenten eines Abgassystems mit der erfindungsgemäßen Dichtung gemäß einem Ausführungsbeispiel;
- Fig. 5: zeigt eine vergrößerte Ansicht eines Ausschnitts des Verbindungsbereichs aus Fig. 4.

### Detaillierte Beschreibung

Im Folgenden werden anhand der Figuren Ausführungsbeispiele für die erfindungsgemäße Dichtung 100 sowie die erfindungsgemäße Unterbaugruppe und die erfindungsgemäße Aufladevorrichtung beschrieben.

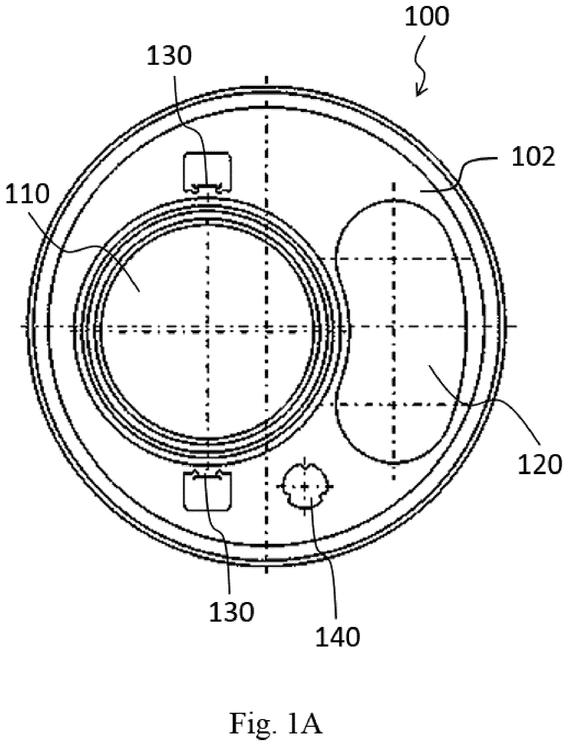

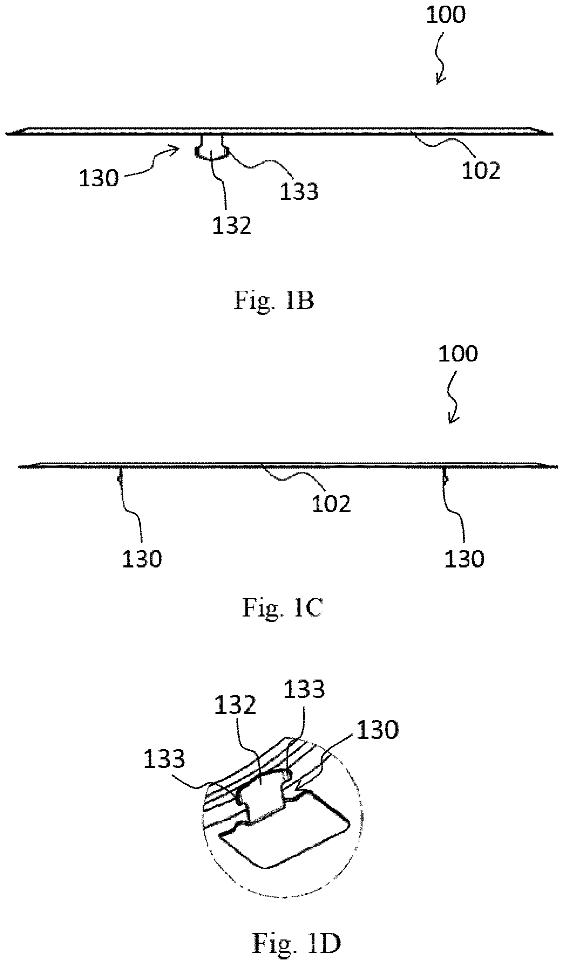

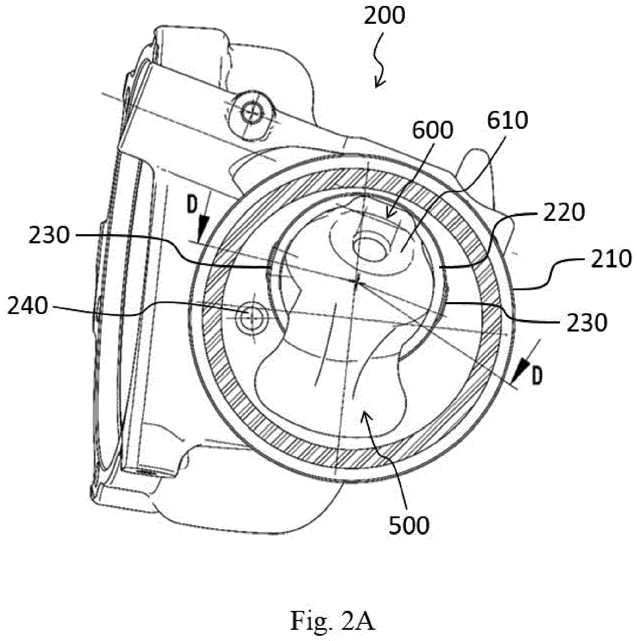

Zunächst wird anhand der Figs. 1A bis 1D die erfindungsgemäße Dichtung 100 näher beschrieben. Anschließend wird die erfindungsgemäße Unterbaugruppe basierend auf dem Beispiel einer mehrstufigen Aufladevorrichtung anhand der Figs. 2a bis 5 detailliert dargestellt. Die Anwendung der Dichtung 100 für eine Verbindung zwischen zwei Turbinengehäusen einer mehrstufigen Aufladevorrichtung soll dabei nur als eine beispielhafte Anwendungsmöglichkeit gesehen werden. Die erfindungsgemäße Dichtung 100 kann auch an jeder weiteren abzudichtenden Verbindung zweier Komponenten, insbesondere im Abgasstrang eines Verbrennungsmotors, zum Einsatz kommen.

**Fig. 1A** zeigt eine Draufsicht eines Ausführungsbeispiels der erfindungsgemäßen Dichtung 100. Wie in **Fig. 1A** zu sehen, ist die Dichtung 100 in Form einer Dichtscheibe, heißt scheibenförmig, ausgestaltet. Der Begriff scheibenförmig ist im Rahmen dieser Anmeldung breit zu verstehen. So kann die Dichtung 100 rund, eckig oder oval ausgestaltet sein oder jede sonstige Form eines abzudichtenden Flansches aufweisen. Unter einer Scheibe ist eine Form zu verstehen, die eine, im Vergleich zu den sonstigen Dimensionen der Dichtung (z.B. Länge, Breite oder Durchmesser) geringere Höhe/Dicke aufweist. Die Höhe/Dicke der Dichtung 100 muss dabei nicht konstant sein. So kann die Dichtung 100 in Ausgestaltungen in speziellen Bereichen Sicken, Erhebungen, V-förmige Bereiche oder sonstige Ausgestaltungselemente (z.B. integrierte Formen für eine Labyrinthdichtung) aufweisen, um die Dichtwirkung zu erhöhen.

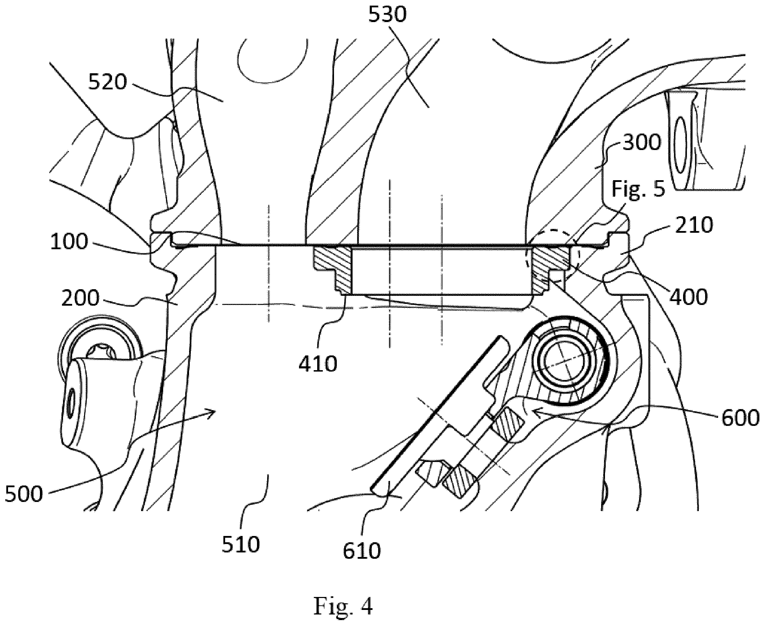

Die erfindungsgemäße Dichtung 100 wird zum Abdichten einer Verbindung zwischen zwei Komponenten 200, 300 (zum Beispiel zwei Gehäusekomponenten 200, 300 einer mehrstufigen Aufladevorrichtung, siehe **Fig. 4**) verwendet. Die in **Fig. 1A** dargestellte Dichtung 100 weist zwei Durchgangsöffnung 110, 120, zum Beispiel zum Durchtritt von Abgasen, und zwei integral mit der Dichtung 100 ausgebildete Befestigungselement 130 zur verliersicheren Befestigung der Dichtung 100 an einer der beiden Komponenten 200, 300 auf. Es können auch nur jeweils eine Durchgangsöffnung 200, 300 und ein Befestigungselement 130 oder mehr als zwei Durchgangsöffnungen 200, 300 und mehr als zwei Befestigungselemente 130 vorgesehen sein. Zum Beispiel können zwischen 1 und 4 Befestigungselemente 130 vorgesehen sein. Insbesondere können 2 oder 3 Befestigungselemente 130 vorgesehen sein.

Durch das Vorsehen des bzw. der integralen Befestigungselemente 130 kann die Dichtung 100 an einem Flansch 210 einer der zu verbindenden Komponenten 200, 300 vormontiert werden, wobei sichergestellt wird, dass die Dichtung 100 während eines Transports, zum Beispiel einer Lieferung vom Hersteller zum Kunden, nicht verloren geht. Außerdem kann eine verliersicher angebrachte Dichtung 100 bei der Montage vorteilhaft sein, wenn zum Beispiel der Bereich der Komponente 200, an dem die Dichtung 100 vorgesehen ist, bei der Montage nach unten, heißt in Richtung Boden, zeigt. In anderen Worten, die Dichtung 100 wird auch an ihrem vorgesehenen Platz gehalten, selbst wenn die Komponente 200 bei der Montage gedreht werden muss, so dass die Dichtung 100 nach unten zeigt.

Durch die integrale Ausgestaltung des oder der Befestigungselemente 130 kann eine separate Sicherungsvorrichtung eingespart werden, wodurch die gesamte Anzahl an Bauteilen reduziert wird. Dies führt wiederum zu einer Reduzierung bei den Herstell-, Lager- und Montagekosten und verringert die Fehleranfälligkeit bei der Montage. Folglich können Fehlervermeidungsvorkehrungen eingespart werden.

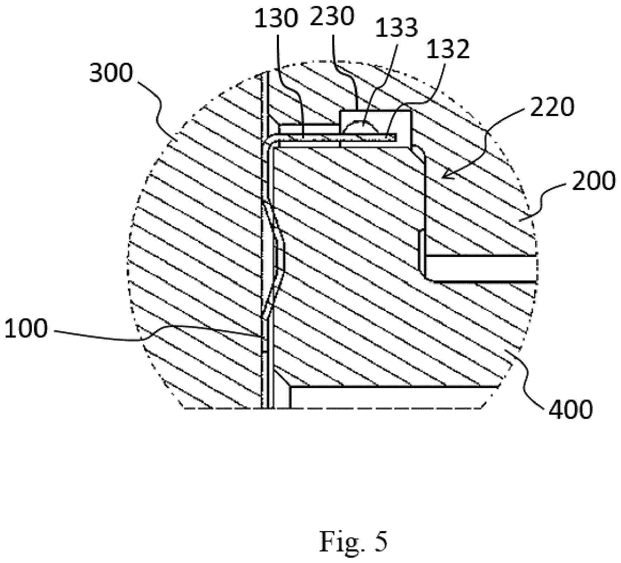

Bezugnehmend auf **Figs. 1B** bis **1D** ist zu erkennen, dass sich die Befestigungselemente 130 im Wesentlichen senkrecht von einem scheibenförmigen Grundkörper 102 der Dichtung 100 erstrecken. Insbesondere sind die Befestigungselemente 130 in einem Kopfbereich 132 breiter ausgestaltet. Wie in **Fig. 1B** und **Fig. 1D** gut zu erkennen, kann das Befestigungselement 130 im Kopfbereich 132 zum Beispiel widerhakenförmig ausgebildet sein. Außerdem weisen die Befestigungselemente 130 des in den **Figs. 1A** bis **1D** gezeigten Ausführungsbeispiels an den seitlichen Enden des Kopfbereichs 132, bezogen auf die scheibenförmige Form des Grundkörpers 102, radial nach außen gebogene Nasen 133 auf. Wenn die Dichtung 100 an der Komponente 200 angebracht wird, können die Nasen 133 der Befestigungselemente 130 in dafür vorgesehene Aussparungen 230 der Komponente 200 einrasten (siehe **Fig. 5**), wodurch die Dichtung 100 verliersicher in der Komponente 200 gehalten wird. Alternativ können die Nasen 133 auch nach radial innen gebogen sein. Dann greifen die Nasen 133 nach radial innen in entsprechende Aussparungen ein, um die Dichtung 100 verliersicher zu halten. Zum Beispiel können die Befestigungselemente 130 entlang des äußeren Umfangs der Dichtung 100 angeordnet sein und die Nasen 133 in entsprechende Aussparung am äußeren Umfang des Flansches einer abzudichtenden Komponente vorgesehen sein (in den Figuren nicht dargestellt). Es können auch radial nach außen und radial nach innen gebogene Nasen vorgesehen sein, die dann in entsprechende Aussparungen der Komponente 22 und eines in der Komponente 22 angeordneten Einsatzes 400 rasten. Es müssen, neben den Aussparungen 230, somit auch an der Komponente 200 keine weiteren Merkmale, wie zum Beispiel Bohrungen für Schrauben, für die Befestigung der Dichtung 100 an der ersten Komponente 200 vorgesehen werden, wodurch der Bearbeitungsaufwand und folglich die Kosten reduziert werden können.

Die Befestigungselemente 130 sind dabei insbesondere angepasst, um zusammen mit den entsprechenden Aussparungen 230 in der ersten Komponente 200 als Rastverbindung zu wirken. Dafür können die Befestigungselement 130 insbesondere federelastische Eigenschaften aufweisen.

Außerdem kann die Dichtung 100 eine Zentrierungsöffnung 140 zur Aufnahme eines Zentrierstiftes 240 aufweisen (siehe **Fig. 1A** und **2A**). Die Zentrieröffnung 140 und der entsprechende Zentrierstift 240 können dabei zum Beispiel eine nicht vollständig runde Form aufweisen, um gleichzeitig ein Verdrehen der Dichtung 100 um den Zentrierstift 240 zu unterbinden (siehe Fig. 1A).

Insbesondere kann die Dichtung 100 ein Biegestanzteil sein. Alternativ kann die Dichtung 100 zum Beispiel auch ein gewalztes, rolliertes oder anderweitig geformtes Bauteil sein. Die Dichtung 100 kann zum Beispiel aus einem hochwarmfesten Blech gefertigt werden. Da die Dichtung 100 für einen Einsatz im Bereich des Abgassystems eines Verbrennungsmotors vorgesehen ist, muss diese hohen Temperaturen standhalten. Somit sollten bevorzugt hochwarmfest Bleche verwendet werden, die bei Temperaturen von 700°C und mehr eingesetzt werden können.

In Ausgestaltungen kann die Dichtung 130 ausgelegt sein, einen Einsatz 400 in einer der Komponenten 200, 300 verliersicher zu halten. Diese Eigenschaft wird im Folgenden anhand des Einsatzbeispiels näher beschrieben, bei dem die erfindungsgemäße Dichtung 100 zum Abdichten einer Verbindung zwischen zwei Turbinengehäusen 200, 300 einer mehrstufigen Aufladevorrichtung verwendet wird. Hierfür wird neben den **Figs. 1A** bis **1D** auf die **Figs. 2A** bis **5** Bezug genommen.

In dieser Verwendung erledigt die Dichtung 100 somit als ein integrales Bauteil mehrere Aufgaben. Einerseits ermöglicht es die Dichtung 100 unterschiedliche Kanalbereiche 510, 520, 530 eines Kanalsystems 500 (siehe **Fig. 5**), das sich von dem ersten Turbinengehäuse 200 über den Verbindungsbereich in das zweite Turbinengehäuse 300 erstreckt, gegeneinander sowie gegenüber der Umgebung abzudichten. Andererseits kann die erfindungsgemäße Dichtung 100 den Einsatz 400 verliersicher halten. Dies hat wiederum Vorteile, da sichergestellt werden kann, dass der Einsatz 400 beim Transport nicht verloren geht. Ebenso ist die Position des Einsatzes 400 für die Montage festgelegt und ein Herausfallen des Einsatzes 400 wird verhindert, selbst wenn das Turbinengehäuse 200 für die Montage so gedreht werden musst, dass der Einsatz 400 nach unten in Richtung Boden zeigt.

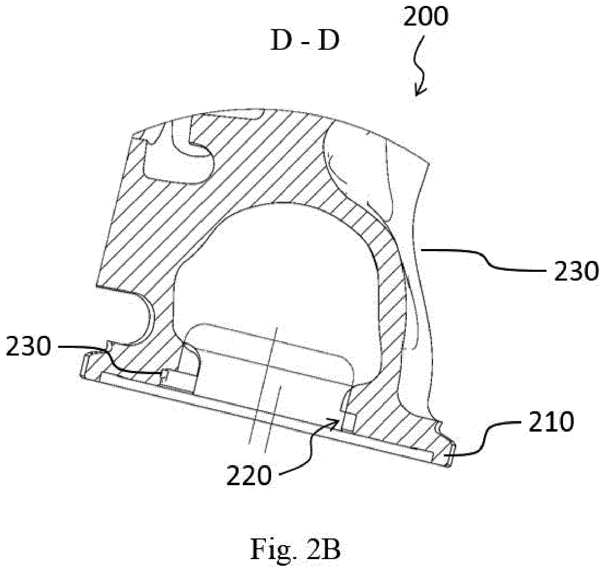

**Fig. 2A** zeigt eine Draufsicht und **Fig. 2B** zeigt eine Schnittansicht, entlang der Linie D-D in **Fig. 2A**, des Turbinengehäuses 200, in das die erfindungsgemäße Dichtung 100 eingelegt werden kann. Die Kombination aus Turbinengehäuse 200 und Dichtung kann dabei als eine Unterbaugruppe für ein Abgassystem eines Verbrennungsmotors angesehen werden. Das Turbinengehäuse 200 weist einen Flansch 210 auf, der zur Verbindung mit dem zweiten Turbinengehäuse 300 dient. Die Dichtung 100 wird im Bereich des Flansches 210 in das Turbinengehäuse 200 eingesetzt. Ebenfalls in **Figs. 2A** und **2B** zu erkennen ist das Kanalsystem 500, das sich durch die beiden Turbinengehäuse 200, 300 erstreckt und durch das im Betrieb Abgas geleitet wird. Im Bereich des Flansches 210 ist außerdem der schon erwähnte Zentrierstift 240 angeordnet, der in die Zentrieröffnung 140 der Dichtung 100 eingreift. Hierüber wird die Dichtung 100 auch gegen ein ungewolltes Verdrehen gesichert.

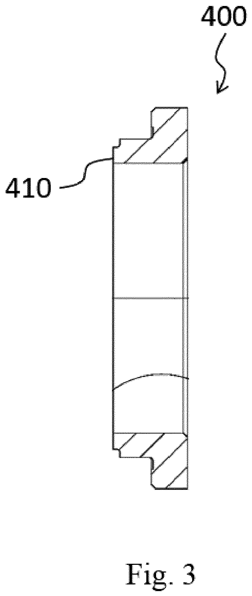

Über die Befestigungselemente 130 wird die Dichtung 100 verliersicher im Bereich des Flansches 210 gehalten. Im gezeigten Ausführungsbeispiel ist außerdem im Bereich des Flansches 210 ein Absatz 220 zur Aufnahme des Einsatzes 400 vorgesehen. Wie in **Fig. 2A** zu erkennen, ist der Absatz 220 teilweise unterbrochen. Wie aus **Fig. 3** und **Fig. 4** zu entnehmen, ist der Einsatz 400 ringförmig ausgestaltet. Entsprechend ist der den Einsatz 400 aufnehmende Absatz 220 ebenfalls ringförmig, kann aber, wie in **Fig. 2A** gezeigt, unterbrochen sein, so dass sich mehrere Absatzabschnitte ergeben. In alternativen Ausgestaltungen kann der Einsatz 400 und entsprechend der Absatz 220 aber auch oval oder mit seitlichen Abflachungen ausgestaltet sein. Der Einsatz 400 wird, nach dem Einsetzen des Einsatzes 400 und der Dichtung 100 in das Turbinengehäuse 200, von der Dichtung 100 verliersicher gehalten. Dies wird weiter unten noch näher beschrieben.

Insbesondere kann der Einsatz 400 ausgelegt sein, um eine Anlagefläche für ein Bypassventil bereitzustellen. Hierfür ist am Einsatz 400 ein entsprechender Ventilsitz 410 ausgebildet sein (siehe **Figs. 3** und **4**)**.** In **Fig. 2A** und **Fig. 4** ist eine entsprechende Klappenanordnung 600 mit einem Klappenteller 610 für ein derartiges Bypassventil dargestellt und jeweils im geöffneten Zustand gezeigt. Im geschlossenen Zustand liegt der Klappenteller 410 auf dem Ventilsitz 410 des Einsatzes 400 auf, um einen Bypasskanal 530 des Kanalsystems 500 zu verschließen. Dabei kann der Einsatz 400 zum Beispiel aus einem im Vergleich zur Komponente 200 höherwertigen Material gefertigt sein. Vorteilhafterweise können über den Einsatz 400 zum Beispiel Fertigungstoleranzen ausgeglichen werden. Außerdem kann aufgrund des hochwertigen Materials des Einsatzes 400 der Verzug, der aufgrund thermischer Verformungen in diesem Bereich auftreten kann, klein gehalten werden. Daraus ergibt sich eine verbesserte Abdichtung und somit eine geringere Leckage des Bypassventils.

Das erste Turbinengehäuse 200 weist im Bereich des Flansches 210 Aussparungen 230 auf, entsprechend der Anzahl an Befestigungselementen 130. Wenn die Dichtung 100 in das Turbinengehäuse 200 eingesetzt wird, greifen die die Befestigungselemente 130, insbesondere die Nasen 133, in die Aussparungen 230 ein. Die Aussparungen 230 sind in dem in den **Figs. 2A****,** **2B** und **5** gezeigten Ausführungsbeispiel in einer Seitenwand im Bereich des Absatzes 220 vorgesehen. Durch die Anordnung der Befestigungselemente 130 und der entsprechenden Aussparungen 230 in diesem Bereich des Turbinengehäuses 200, kann die Dichtung 100 gleichzeitig als Verliersicherung für den Einsatz 400 dienen. Hierfür wird zunächst der Einsatz 400 im Turbinengehäuse 200 im Bereich des Absatzes 220 angeordnet. Anschließend wird darüber die Dichtung 100 eingelegt, so dass die Befestigungselemente 130 seitlich zwischen dem Einsatz 400 und dem Gehäuse 200 angeordnet sind und, insbesondere die Kopfbereiche 132 und die daran vorgesehenen radial nach außen gebogenen Nasen 133, in die entsprechenden Aussparungen 230 eingreifen. Aufgrund ihrer federelastischen Eigenschaften bilden die Befestigungselemente 130 zusammen mit den Aussparungen 230 eine Rastverbindung, die die Dichtung 100 verliersicher am Turbinengehäuse 200 hält. Da die Dichtung 100 sich auch über den Einsatz 400 erstreckt, heißt, der Einsatz 400 ist zwischen Dichtung 100 und Turbinengehäuse 200 angeordnet, wird auch der Einsatz 400 verliersicher in seiner Position am Turbinengehäuse 200 gehalten. Die vorangehend beschriebene Anordnung ist insbesondere in der vergrößerten Ansicht der **Fig. 5** gut erkenntlich dargestellt.

Wie bereits erwähnt, zeigt das Ausführungsbeispiel der **Figs. 2A** bis 5 eine mehrstufige Aufladevorrichtung mit ersten und zweiten Turbinengehäusen 200, 300. Das erste Turbinengehäuse 200 kann zum Beispiel Teil einer Niederdruckturbine der mehrstufigen Aufladevorrichtung sein und das zweite Turbinengehäuse kann Teil einer Hochdruckturbine der mehrstufigen Aufladevorrichtung sein.

Im Montierten Zustand der mehrstufigen Aufladevorrichtung, siehe **Figs. 4** und **5**, ist die erfindungsgemäße Dichtung 100 dann zwischen dem ersten Turbinengehäuse 200 und dem zweiten Turbinengehäuse 300 festgeklemmt. Gleiches gilt für den Einsatz 400.

Bezugnehmend auf **Fig. 4**, erstreckt sich, wie bereits beschrieben, durch die mehrstufige Aufladevorrichtung ein Kanalsystem 500. Ein Kanal 510 des Kanalsystems 500 kann sich im Verbindungsbereich des ersten Turbinengehäuses 200 und des zweiten Turbinengehäuses 300, insbesondere in dem Bereich in dem des Einsatzes 400 angeordnet ist, aufzweigen, wodurch der Hauptkanal 520 und der Bypasskanal 530 gebildet wird. Dann ist die erste Durchgangsöffnung 110 der Dichtung 100 im Bereich des Einlasses des Bypasskanals 530 angeordnet und die zweite Durchgangsöffnung 120 ist im Bereich des Hauptkanals 520 angeordnet. Im vormontierten und im eingebauten Zustand liegt somit der Randbereich der ersten Durchgangsöffnung 110 der Dichtung 100 auf einem entsprechenden Randbereich eines ersten Kanals, in dem in den Figuren dargestellten Ausführungsbeispiel im Randbereich des Bypasskanals 530 bzw. einem entsprechenden Randbereich des Einsatzes 400 auf, um eine Verbindung zwischen dem ersten Turbinengehäuse 200 und dem zweiten Turbinengehäuse 300 in diesem Bereich abzudichten. Gleichermaßen liegt der Randbereich der zweiten Durchgangsöffnung 120 auf einem entsprechenden Randbereich des zweiten Kanals, des Hauptkanals 520, im ersten Turbinengehäuse 200 auf, um eine Verbindung zwischen dem ersten Turbinengehäuse 200 und dem zweiten Turbinengehäuse 300 in diesem Bereich abzudichten.

Wie bereits erwähnt, ist die erfindungsgemäße Dichtung 100 außerdem ausgelegt, die Verbindung zwischen dem ersten Turbinengehäuse 200 und dem zweiten Turbinengehäuse 300 gegenüber der Umgebung abzudichten. In anderen Worten, die Dichtung 100 ist auch ausgelegt, die gesamte Verbindung zwischen dem ersten Turbinengehäuse 200 und dem zweiten Turbinengehäuse 300 gegenüber der Umgebung abzudichten. Die erste Durchgangsöffnung 110 der Dichtung 100 gibt somit den Bypasskanal 530 frei, die zweite Durchgangsöffnung 120 gibt den Hauptkanal 520 frei und die Dichtung 100 dichtet die Kanäle 520, 530 des Kanalsystems 500 gegenüber einander und gegenüber der Umgebung ab.

Als Alternative, die nicht Teil der Erfindung ist, kann die Aufspaltung des Kanals 510 in den Hauptkanal 520 und den Bypasskanal 530 über den Einsatz 400 erfolgen. Alternativ kann der Einsatz 400 aber auch weggelassen werden und die Aufspaltung erfolgt ausschließlich über die entsprechende Ausgestaltung der ersten und zweiten Turbinengehäuse 200, 300 im Flanschbereich. In diesem Fall liegt der Klappenteller 610 der Klappenanordnung 600 des Bypassventils direkt auf einem im zweiten Turbinengehäuse 300 ausgebildeten Ventilsitz auf (in den Figuren nicht gezeigt).

## Patentansprüche

1. Unterbaugruppe für ein Abgassystem eines Verbrennungsmotors mit
einer ersten Komponente (200), wobei die erste Komponente (200) zumindest einen Teil eines Kanalsystems (500) und einen Flansch (210) zur Verbindung mit einer zweiten Komponente (300) aufweist;
einer Dichtung (100) zum Abdichten der Verbindung zwischen den zwei Komponenten, wobei die Dichtung (100) im Bereich des Flansches (210) angeordnet ist, in Form einer Dichtscheibe ausgestaltet ist und mindestens eine Durchgangsöffnung (110, 120) zum Durchtritt von Abgasen aufweist; und mindestens einem integral mit der Dichtung (100) ausgebildeten Befestigungselement (130) zur verliersicheren Befestigung der Dichtung (100) an der ersten Komponente (200) des Abgassystems; und
einem Einsatz (400), welcher ausgelegt ist, um eine Anlagefläche für ein Bypassventil bereitzustellen,
wobei der Einsatz (400) zwischen der Dichtung (100), welche sich über den Einsatz (400) erstreckt, und der ersten Komponente (200) in einem Absatz (220) im Bereich des Flansches (210) aufgenommen wird, und
wobei der Einsatz (400) von der Dichtung (100) verliersicher in seiner Position an der ersten Komponente (200) gehalten wird, indem das Befestigungselement (130) seitlich zwischen dem Einsatz (400) und der Komponente (200) angeordnet ist,
**dadurch gekennzeichnet, dass** das Befestigungselement (130) in eine entsprechende Aussparung (230), welche in einer Seitenwand im Bereich des Absatzes (220) vorgesehen ist, eingreift.

2. Unterbaugruppe gemäß Anspruch 1, **dadurch gekennzeichnet, dass** das Befestigungselement (130) in einem Kopfbereich (132) breiter ausgestaltet ist, insbesondere widerhakenförmig ausgebildet ist.

3. Unterbaugruppe gemäß Anspruch 2, **dadurch gekennzeichnet, dass** das Befestigungselement (130) an zumindest einem Ende des Kopfbereichs (132) mindestens eine, bezogen auf den scheibenförmigen Grundkörper (102), radial nach außen und/oder radial nach innen gebogene Nase (133) aufweist.

4. Unterbaugruppe gemäß irgendeinem der vorangehenden Ansprüche, **dadurch gekennzeichnet, dass** das Befestigungselement (130) angepasst ist, zusammen mit der entsprechenden Aussparung (230) in der ersten Komponente (200) als Rastverbindung zu wirken.

5. Unterbaugruppe gemäß irgendeinem der vorangehenden Ansprüche, **dadurch gekennzeichnet, dass** das Befestigungselement (130) federelastische Eigenschaften aufweist.

6. Unterbaugruppe gemäß irgendeinem der vorangehenden Ansprüche, **dadurch gekennzeichnet, dass** die Dichtung (100) außerdem eine Zentrierungsöffnung (140) zur Aufnahme eines Zentrierstiftes (240) aufweist.

7. Unterbaugruppe gemäß Anspruch 6, außerdem umfassend einen Zentrierstift (240), der in die Zentrieröffnung (140) der Dichtung (100) eingreift.

8. Unterbaugruppe gemäß irgendeinem der vorangehenden Ansprüche, **dadurch gekennzeichnet, dass** die erste Komponente (200) im Bereich des Flansches (210) mehrere Aussparungen (230), entsprechend der Anzahl an Befestigungselementen (130), aufweist, in die die Befestigungselemente (130) eingreifen.

9. Unterbaugruppe gemäß irgendeinem der vorangehenden Ansprüche, außerdem umfassend eine Klappenanordnung (600) eines Bypassventils zum Verschließen eines Bypasskanals (530).

10. Unterbaugruppe gemäß Anspruch 9, **dadurch gekennzeichnet, dass** die Klappenanordnung (600) einen Klappenteller (610) aufweist, wobei der Klappenteller (610) mit einem Ventilsitz (410) zusammenwirkt, um den Bypasskanal zu verschließen.

11. Unterbaugruppe gemäß Anspruch 10, wenn abhängig von Anspruch 9, wobei der Ventilsitz (410) an der Anlagefläche des Einsatzes (400) ausgebildet ist.

12. Mehrstufige Aufladevorrichtung für einen Verbrennungsmotor mit
einer Hochdruckturbine; und
einer Niederdruckturbine umfassend eine Unterbaugruppe gemäß irgendeinem der vorangehenden Ansprüche, wobei die erste Komponente ein erstes Turbinengehäuse (200) ist, wobei das erste Turbinengehäuse (200) über den Flansch (210) mit einem zweiten Turbinengehäuse (300) der Hochdruckturbine verbunden ist, und, wobei die Dichtung (100) und der Einsatz (400) zwischen dem ersten Turbinengehäuse (200) und dem zweiten Turbinengehäuse (300) festgeklemmt sind.

## Claims

1. Subassembly for an exhaust-gas system of an internal combustion engine with
a first component (200), wherein the first component (200) comprises at least a part of a channel system (500) and a flange (210) for connection to a second component (300);
a seal (100) for sealing off the connection between the two components, wherein the seal (100) is arranged in the region of the flange (210), is in the form of a sealing disc and has at least one passage opening (110, 120) for passage of exhaust gases; and
at least one fastening element (130), which is formed integrally with the seal (100) and serves for captive fastening of the seal (100) to the first component (200) of the exhaust-gas system; and
an insert (400), which is designed to provide an abutment surface for a bypass valve, wherein the insert (400) is received in a shoulder (220) in the region of the flange (210), between the seal (100), which extends over the insert (400), and the first component (200), and
wherein the insert (400) is held captively in its position at the first component (200) by the seal (100) in that the fastening element (130) is arranged laterally between the insert (400) and the component (200),
**characterized in that** the fastening element (130) engages into a corresponding recess (230), which is provided in a side wall in the region of the shoulder (220).

2. Subassembly according to Claim 1, **characterized in that** the fastening element (130) is formed so as to be wider in a head region (132), in particular is formed in a barb-like manner.

3. Subassembly according to Claim 2, **characterized in that**, at at least one end of the head region (132), the fastening element (130) has at least one radially outwardly and/or radially inwardly bent nose (133) in relation to the disc-shaped main body (102).

4. Subassembly according to any of the preceding claims, **characterized in that** the fastening element (130) is adapted to act, together with the corresponding recess (230) in the first component (200), as a latching connection.

5. Subassembly according to any of the preceding claims, **characterized in that** the fastening element (130) has spring elastic properties.

6. Subassembly according to any of the preceding claims, **characterized in that** the seal (100) also has a centring opening (140) for receiving a centring pin (240).

7. Subassembly according to Claim 6, also comprising a centring pin (240) which engages into the centring opening (140) of the seal (100).

8. Subassembly according to any of the preceding claims, **characterized in that**, in the region of the flange (210), the first component (200) has multiple recesses (230), according to the number of fastening elements (130), into which the fastening elements (130) engage.

9. Subassembly according to any of the preceding claims, also comprising a flap arrangement (600) of a bypass valve for closing off a bypass channel (530).

10. Subassembly according to Claim 9, **characterized in that** the flap arrangement (600) has a flap plate (610), wherein the flap plate (610) interacts with a valve seat (410) to close off the bypass channel.

11. Subassembly according to Claim 10, where dependent on Claim 9, wherein the valve seat (410) is formed on the abutment surface of the insert (400).

12. Multi-stage charging device for an internal combustion engine with
a high-pressure turbine; and
a low-pressure turbine comprising a subassembly according to any of the preceding claims, wherein the first component is a first turbine housing (200), wherein the first turbine housing (200) is connected to a second turbine housing (300) of the high-pressure turbine via the flange (210), and wherein the seal (100) and the insert (400) are clamped firmly between the first turbine housing (200) and the second turbine housing (300).

## Revendications

1. Sous-ensemble pour un système de gaz d'échappement d'un moteur à combustion interne, avec
un premier composant (200), le premier composant (200) comportant au moins une partie d'un système de conduits (500) et une bride (210) destinée à la liaison à un deuxième composant (300) ;
une garniture d'étanchéité (100) destinée à étanchéifier la liaison entre les deux composants, la garniture d'étanchéité (100) étant disposée dans la région de la bride (210), étant conçue sous la forme d'une rondelle d'étanchéité et comportant au moins une ouverture de passage (110, 120) destinée au passage de gaz d'échappement ; et
au moins un élément de fixation (130) formé d'un seul tenant avec la garniture d'étanchéité (100) pour fixer de manière imperdable la garniture d'étanchéité (100) au premier composant (200) du système de gaz d'échappement ; et
un insert (400) étant conçu pour fournir une surface d'appui à une soupape de dérivation,
l'insert (400) étant reçu dans un épaulement (220) situé dans la région de la bride (210) entre la garniture d'étanchéité (100), qui s'étend sur l'insert (400), et le premier composant (200), et
l'insert (400) étant maintenu de manière imperdable dans sa position sur le premier composant (200) par la garniture d'étanchéité (100) en ce que l'élément de fixation (130) est disposé latéralement entre l'insert (400) et le composant (200),
**caractérisé en ce que** l'élément de fixation (130) s'engage dans un évidement correspondant (230) qui est ménagé dans une paroi latérale dans la région de l'épaulement (220).

2. Sous-ensemble selon la revendication 1, **caractérisé en ce que** l'élément de fixation (130) est conçu pour être plus large dans une région de tête (132), en particulier étant conçu en forme d'ardillon.

3. Sous-ensemble selon la revendication 2, **caractérisé en ce que** l'élément de fixation (130) comporte à au moins une extrémité de la région de tête (132) au moins un ergot (133) étant plié radialement vers l'extérieur et/ou radialement vers l'intérieur par rapport au corps de base (102) en forme de disque.

4. Sous-ensemble selon l'une des revendications précédentes, **caractérisé en ce que** l'élément de fixation (130) est apte à faire office de liaison à encliquetage conjointement avec l'évidement correspondant (230) ménagé dans le premier composant (200).

5. Sous-ensemble selon l'une des revendications précédentes, **caractérisé en ce que** l'élément de fixation (130) présente des propriétés ressort-élastiques.

6. Sous-ensemble selon l'une des revendications précédentes, **caractérisé en ce que** la garniture d'étanchéité (100) comporte en outre une ouverture de centrage (140) destinée à recevoir un pion de centrage (240).

7. Sous-ensemble selon la revendication 6, comprenant en outre un pion de centrage (240) s'engageant dans l'ouverture de centrage (140) de la garniture d'étanchéité (100).

8. Sous-ensemble selon l'une des revendications précédentes, **caractérisé en ce que** le premier composant (200) comporte dans la région de la bride (210) plusieurs évidements (230) correspondant au nombre d'éléments de fixation (130) dans lesquels les éléments de fixation (130) s'engagent.

9. Sous-ensemble selon l'une des revendications précédentes, comprenant en outre un agencement à clapet (600) d'une soupape de dérivation destinée à fermer un conduit de dérivation (530).

10. Sous-ensemble selon la revendication 9, **caractérisé en ce que** l'agencement à clapet (600) comporte une plaque de clapet (610), la plaque de clapet (610) coopérant avec un siège de soupape (410) pour fermer le conduit de dérivation.

11. Sous-ensemble selon la revendication 10 lorsqu'elle dépend de la revendication 9, le siège de soupape (410) étant formé sur la surface d'appui de l'insert (400).

12. Compresseur à plusieurs étages destiné à un moteur à combustion interne, avec
une turbine à haute pression ; et
une turbine à basse pression comprenant un sous-ensemble selon l'une des revendications précédentes, le premier composant étant un premier carter de turbine (200), le premier carter de turbine (200) étant relié par le biais de la bride (210) à un deuxième carter de turbine (300) de la turbine à haute pression, et la garniture d'étanchéité (100) et l'insert (400) étant serrés entre le premier carter de turbine (200) et le deuxième carter de turbine (300).
